# DEMANDE DE BREVET EUROPEEN

(11) **EP 1 780 426 A1**
(43) Date de publication de la demande: **02.05.2007**
(21) Numéro de dépôt: 06360051.4
(22) Date de dépôt: 26.10.2006
(51) Int. Cl.: F16B 5/12, B60J 10/02, B29C 47/04

(54) **Profilé à bourrelet coextrudé en matière plastique à dilatation et retrait réduits**

(30) Priorité: 28.10.2005 FR 0511036
(71) Demandeur: Rehau SA, 57340 Morhange (FR)
(72) Inventeur: Renaudin, Jean-Marie, 57670 Francaltroff (FR)
(74) Mandataire: Metz, Paul

(57) **Abrégé**

Le profilé extrudé (1) comporte une partie fonctionnelle (7) et une partie d'accrochage (2) à section de forme générale en U, pouvant être renforcée par un insert métallique plat (17).

Pour orienter ou corriger la déformation linéaire du profilé, la partie d'accrochage comporte au moins un bourrelet (18) coextrudé en matière plastique à dilatation et retrait réduits, s'étendant longitudinalement sur sensiblement toute la longueur du profilé.

Avantageusement, ce bourrelet peut être réalisé en matière plastique chargée, notamment en polypropylène chargé, matière plastique renforcée par des fibres de verre et/ou du talc.

Cette invention intéresse les fabricants et les utilisateurs de joints profilés et notamment d'enjoliveurs de pare-brise.

## Description

La présente invention concerne un profilé extrudé comportant au moins un bourrelet coextrudé en matière plastique à dilatation et retrait réduits, en vue d'orienter ou de corriger la déformation linéaire du profilé.

La présente invention s'adresse plus particulièrement aux profilés extrudés destinés aux véhicules automobiles, notamment aux profilés d'habillage et/ou d'étanchéité du pourtour d'une vitre fixe ou mobile, telle que par exemple un pare-brise, une lunette ou une custode, d'un véhicule automobile ou autre.

Elle peut également s'appliquer aux profilés extrudés d'étanchéité, de protection ou d'esthétique pour vitres, panneaux, rebords de carrosserie, chants métalliques ou autres dans le domaine automobile, des transports, du bâtiment ou tout autre domaine, et notamment aux joints profilés destinés à être montés sur un rebord métallique, plastique ou composite s'étendant par exemple dans l'encadrement d'un ouvrant de carrosserie automobile tel qu'un capot moteur, une portière, un coffre ou une vitre ouvrante non coulissante.

De façon classique, ce type de profilé extrudé est constitué d'une partie d'accrochage à section de forme générale en U, comprenant une paroi de base prolongée par deux parois latérales délimitant entre elles une rainure qui permet la mise en place du profilé sur un support, notamment en bordure d'un vitrage ou par exemple sur un rebord de carrosserie, et d'une partie fonctionnelle, par exemple une lèvre de masquage ou un bourrelet d'étanchéité en matière plastique souple.

Une application préférentielle de l'invention concerne les enjoliveurs de pare-brises.

Ces profilés, lorsqu'ils ne sont pas stabilisés en dilatation par une armature semi-rigide par exemple un insert métallique, présentent un défaut qui apparaît durant les expositions prolongées à la chaleur, par exemple sur des véhicules garés toute une journée en plein soleil durant l'été dans un pays d'Europe du sud.

Dans le cas par exemple d'un enjoliveur de pare-brise, ce défaut consiste principalement en un déplacement vers le haut des branches latérales du cadre, également appelées brins latéraux, dont l'importance dépend de la durée d'exposition à la chaleur et de la température atteinte. Lorsque cette durée est importante, les coins supérieurs de l'enjoliveur de pare-brise s'écartent du pare-brise, ce qui entraîne à terme un déchaussement complet des coins supérieurs de l'enjoliveur de pare-brise.

Selon le type de profilé extrudé, la nature exacte des défauts peut changer, mais demeure toujours gênante.

Ce type de défaut provient de l'important coefficient de dilatation thermique linéaire de la matière plastique utilisée (élastomère thermoplastique) qui est nettement supérieur à celui du pare-brise ou du support sur lequel le profilé est monté. Durant l'exposition d'un véhicule garé toute une journée en plein soleil durant l'été dans un pays d'Europe du sud, on peut atteindre des températures de l'ordre de 100°C et la dilatation thermique du profilé est alors très importante par rapport à celle de son support.

Au refroidissement, la matière plastique se contracte, ce qui peut conduire à un déchaussement du profilé comme dans le cas cité précédemment.

Le but de l'invention est de remédier à cela en fournissant un profilé extrudé comportant un moyen permettant d'orienter ou de corriger la déformation linéaire du profilé.

Pour résoudre ce problème technique, différentes solutions ont été proposées dans l'art antérieur.

La première solution consiste à coller le profilé sur son support et notamment l'enjoliveur sur le bord du pare-brise, avec un adhésif par exemple de type gurit ou butyl, qui ne sèche pas à l'air et présente une pégosité permanente. L'adhésif peut ainsi être déposé en usine à la fabrication du profilé ou juste après celle-ci. L'ensemble est alors envoyé sur son lieu de montage, où il est collé sur son support dans un deuxième temps.

Cette solution est relativement onéreuse notamment au niveau de l'emballage, car les profilés doivent être emballés avec précaution pour éviter qu'ils ne se collent les uns aux autres durant le transport. En outre, en cas d'exposition prolongée en plein soleil, des déformations linéaires du profilé apparaissent encore. Le défaut de déchaussement dans les angles est cependant amoindri.

Une autre solution connue consiste à renforcer la partie d'accrochage du profilé par un insert métallique à section de forme générale en U. Cette solution, techniquement optimale, résout parfaitement le problème technique. Elle est cependant particulièrement chère en prix pièce et en investissement outillage. En effet, l'insert métallique doit d'abord être formé, le profilé rendu rigide doit ensuite être cintré selon la forme de son support et le produit final nécessite un emballage spécifique. Cette solution triple le coût de fabrication du profilé. Elle n'est donc pas acceptable d'un point de vue économique.

Une dernière solution connue consiste à renforcer le profilé par un insert métallique plat et non plus en U. Un tel profilé revient nettement moins cher, à la fois en prix pièce et en coût d'outillage. Cependant, il ne permet pas de supprimer de façon satisfaisante les défauts visés.

En effet, les profilés de ce type ne restent pas rectilignes, du fait du retrait différentiel entre les parties renforcées et les parties non renforcées de ceux-ci.

Le retrait est un phénomène de contraction de la matière plastique au refroidissement, contraction qui s'effectue dans toutes les directions, mais qui, pour un profilé, s'effectue préférentiellement dans la direction d'extrusion correspondant à la direction d'orientation des chaînes de polymères.

Ce phénomène de retrait différentiel conduit le profilé à se galber et à se vriller, ce qui peut devenir très gênant à la fois lors de sa fabrication, pendant laquelle le profilé se déchausse de ses guides de confection, et/ou ensuite lors du montage pendant lequel le profilé se retrouve galbé et vrillé la plupart du temps dans la direction opposée au sens de montage. Cette dernière solution n'est donc pas non plus satisfaisante.

Pour résoudre le problème technique et supprimer ce défaut de manière économiquement et techniquement avantageuse, l'invention consiste à coextruder, dans la partie d'accrochage du profilé, un ou plusieurs bourrelet(s) de matière plastique à dilatation et retrait réduits, s'étendant longitudinalement sur sensiblement toute la longueur du profilé.

La partie d'accrochage du profilé comporte préférentiellement au moins deux bourrelets répartis de part et d'autre de la fibre neutre du profilé.

De préférence, au moins un bourrelet est situé dans une partie non visible du profilé lorsqu'il est monté sur son support.

Selon un mode de réalisation préférentiel de l'invention, au moins un bourrelet est situé au niveau de l'une des parois latérales de la partie d'accrochage, de préférence à proximité de l'extrémité libre de cette paroi latérale et peut même occuper entièrement l'extrémité libre de cette paroi latérale.

Au moins un bourrelet peut être avantageusement réalisé en matière plastique chargée, notamment en polypropylène chargé, et par exemple en matière plastique renforcée par des fibres de verre ou renforcée par du talc ou par les deux matières en mélange dans des proportions adéquates.

Ces bourrelets permettent une correction du galbe, qui peut être ajusté pour obtenir selon les besoins un galbe nul ou le galbe souhaité, par exemple un galbe identique à celui d'un pare-brise et dans le sens du montage.

Avantageusement, la partie d'accrochage du profilé peut également être renforcée par un insert plat, de préférence en aluminium, disposé au niveau de sa paroi de base.

Selon le même principe, l'invention peut également s'appliquer à des profilés avec un insert différent, voire même ne comportant aucun insert.

La présence d'un ou de plusieurs bourrelet(s) selon l'invention permet avantageusement et sans surcoût important, d'orienter ou de corriger la déformation linéaire et/ou d'obtenir un galbe contrôlé dans une certaine direction.

D'autres caractéristiques et avantages de l'invention apparaîtront à la lecture de la description détaillée qui va suivre, description faite en référence aux dessins annexés, dans lesquels :
- la figure 1 est une vue en coupe transversale d'un profilé de type enjoliveur de pare-brise destiné à être collé le bord d'un pare-brise selon la première solution de l'art antérieur ;
- la figure 2 est une vue en coupe transversale d'un enjoliveur de pare-brise dont la partie d'accrochage est renforcée par un insert métallique à section en U selon la deuxième solution de l'art antérieur ;
- la figure 3 est une vue en coupe transversale d'un enjoliveur de pare-brise dont la partie d'accrochage est renforcée par un insert métallique plat selon la troisième solution de l'art antérieur ;
- la figure 4 est une coupe transversale d'un exemple de profilé selon l'invention ;
- la figure 5 est une coupe transversale d'un autre exemple de profilé selon l'invention.

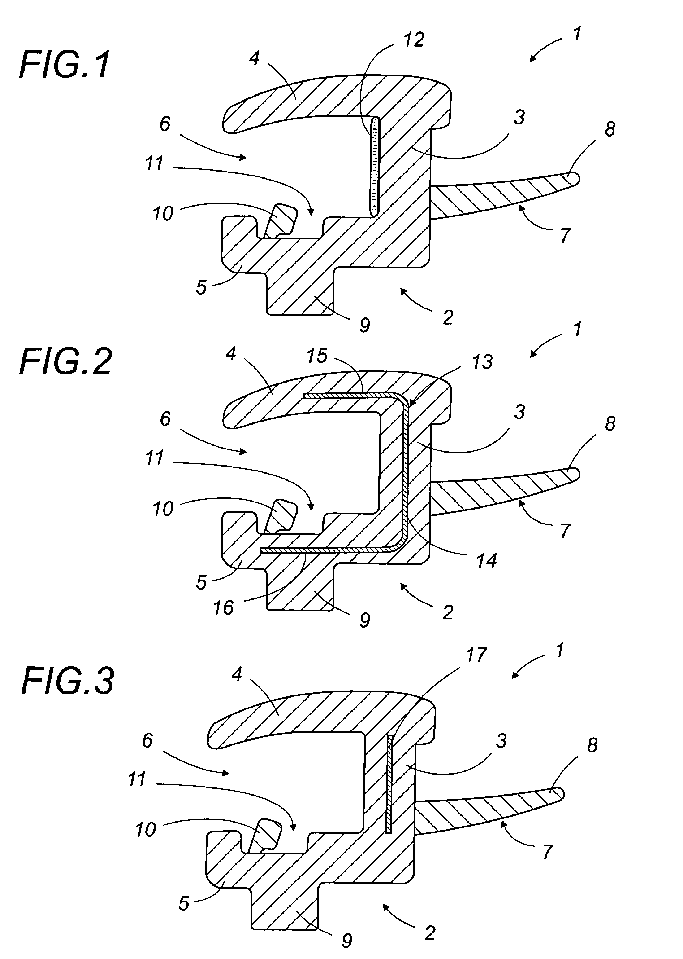

Le profilé extrudé selon la présente invention va maintenant être décrit de façon détaillée en référence aux figures 1 à 5. Les éléments équivalents représentés sur les différentes figures porteront les mêmes références numériques.

Par convention dans cette demande, on définira les notions de haut et de bas, inférieur et supérieur, horizontal et vertical..., en fonction de l'orientation adoptée par les profilés tels que représentés sur les différentes figures. Il est entendu que cette orientation ne sera pas forcément conservée par le profilé une fois celui-ci mis en place.

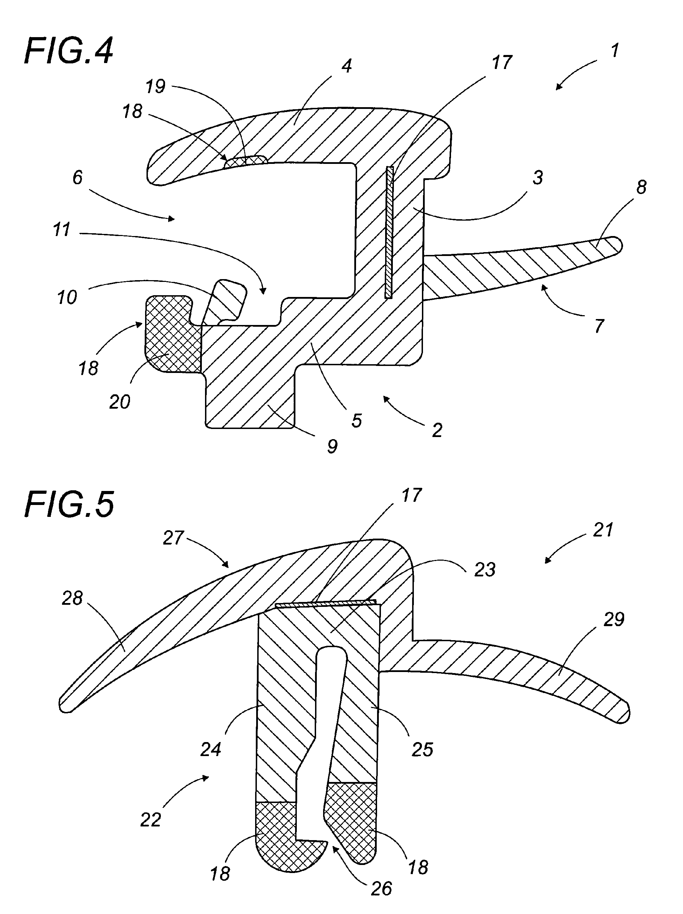

Un même profilé extrudé 1 de type enjoliveur de pare-brise a été représenté en coupe transversale sur les quatre premières figures pour illustrer comparativement la solution de l'invention représentée sur la figure 4 et trois solutions de l'art antérieur représentées sur les figures 1 à 3.

Ce type de profilé 1 sert de joint périmétrique de garniture, utilisé pour ceinturer une vitre rapportée sur une ouverture de carrosserie de véhicule et notamment un pare-brise, une custode ou une lunette arrière.

Classiquement, un tel profilé 1 comporte une partie d'accrochage 2 à section de forme générale en U couché, destinée à être chaussée sur le bord de la vitre.

La partie d'accrochage 2 est constituée d'une paroi de base 3, sensiblement verticale et formant la base du U, prolongée à ses extrémités par deux parois latérales sensiblement horizontales, l'une supérieure 4 et l'autre inférieure 5, formant les branches du U.

Ces parois 3, 4 et 5 délimitent entre elles une rainure 6, dont l'ouverture est dirigée vers la vitre. Cette rainure 6 est conformée de manière à pouvoir recevoir dans sa cavité réceptrice le bord de la vitre et à l'enserrer entre ses parois.

De la paroi de base 3, s'étend en direction opposée à la rainure 6, c'est-à-dire en direction de la carrosserie, une paroi souple longitudinale et sensiblement horizontale formant une lèvre souple de masquage 7 et constituant la partie fonctionnelle de ce profilé.

L'extrémité libre 8 de cette lèvre de masquage 7 est prévue pour reposer sur la tôle de carrosserie afin de masquer l'interstice inesthétique existant entre le bord de la vitre et celui adjacent de la carrosserie du fait des tolérances de fabrication de la tôle de carrosserie.

Le joint 1 présente également une nervure 9 de section sensiblement rectangulaire, située sous la paroi latérale inférieure 5 et servant de butée de positionnement.

Cette nervure 9 permet avantageusement de maintenir un écartement optimal du joint 1 par rapport au repli de carrosserie sur lequel il doit être posé et par-là de maintenir un écartement optimal de la vitre par rapport à la carrosserie.

D'autre part, la rainure 6 est munie d'une lèvre de retenue 10 rattachée de manière articulée à la paroi latérale inférieure 5 et faisant saillie dans la cavité réceptrice de la rainure 6. Cette lèvre de retenue 10 est orientée en direction du fond de la cavité et peut s'escamoter dans un logement 11 de la paroi latérale inférieure 5.

De par son orientation, sa forme, sa souplesse et son caractère escamotable, la lèvre de retenue 10 ne s'oppose que très faiblement à l'engagement du bord d'une vitre dans la rainure 6.

Par contre, une fois le profilé 1 monté sur le bord de la vitre, la lèvre 10 contribue à la retenue du profilé. En effet, lorsqu'un effort de retrait est exercé sur le profilé 1, la lèvre de retenue 10 se soulève et dans un mouvement d'arc-boutement crée un pincement s'opposant à l'arrachement du profilé 1.

Le profilé de la figure 1 correspond à une première solution de l'art antérieur.

Ce profilé est destiné à être collé sur son support de montage. Pour cela, il comporte une couche de matière adhésive 12 déposée au fond de la rainure 6 sur la face intérieure de la paroi de base 3.

Conformément à la deuxième solution de l'art antérieur, le profilé représenté sur la figure 2 renferme une armature métallique 13 noyée dans la matière constitutive de sa partie d'accrochage 2.

Comme la partie d'accrochage 2, l'armature 13 présente une section de forme en U couché. Elle est formée d'une paroi de base 14 et de deux parois latérales supérieure 15 et inférieure 16, renforçant respectivement la paroi de base 3, la paroi latérale supérieure 4 et la paroi latérale inférieure 5 de la partie d'accrochage 2.

Le profilé 1 représenté sur la figure 3 illustre la troisième solution de l'art antérieur. Pour améliorer sa rigidité, il renferme un insert plat 17 disposé à l'intérieur de la paroi de base 3 de sa partie d'accrochage 2.

L'insert plat 17, de préférence métallique, forme une bande orientée sensiblement parallèlement à la paroi de base 3 de la partie d'accrochage 2 et limitée à cette paroi. Les parois latérales supérieure 4 et inférieure 5 de la partie d'accrochage 2 du profilé restent libres et donc non stabilisées en dilatation.

Les avantages et les inconvénients de ces différentes solutions antérieures ont déjà été exposés dans la partie introductive de la présente demande.

Les figures 4 et 5 représentent deux exemples de réalisation de l'invention.

L'invention consiste à coextruder au moins un bourrelet 18 de matière plastique à dilatation et retrait réduits, dans la partie d'accrochage 2 d'un profilé 1.

En section, un tel bourrelet 18 présente une forme quelconque adaptée à la forme technique de la partie d'accrochage 2 du profilé 1 selon l'application visée. Différents exemples non limitatifs sont donnés sur les figures 4 et 5.

La taille d'un tel bourrelet 18 est également variable en fonction de sa composition, de son emplacement et des contraintes techniques liées au profilé 1. Il doit cependant être suffisant pour remplir correctement sa fonction, c'est-à-dire pour orienter ou corriger la déformation linéaire du profilé 1.

Le bourrelet 18, réalisé par extrusion, s'étend longitudinalement sur sensiblement toute la longueur du profilé 1.

Lorsque le profilé 1 comporte plusieurs bourrelets 18, ceux-ci peuvent selon les cas être de forme et/ou de taille identiques ou différentes.

Dans un mode de réalisation préféré, le ou les bourrelet(s) 18 de matière plastique à dilatation et retrait réduits sont réalisés en matière plastique chargée, notamment en polypropylène chargé, par exemple en matière plastique renforcée par des fibres de verre ou renforcée par du talc ou par les deux matières en mélange dans des proportions adéquates.

Selon un mode de réalisation préférentiel, la partie d'accrochage 2 de ce profilé 1 est renforcée par un insert plat 17 disposé au niveau de sa paroi de base 3. Cet insert 17 est préférentiellement métallique et encore plus préférentiellement réalisé en aluminium. En effet, un insert 17 en aluminium renforce le profilé tout en présentant une flexibilité suffisante pour qu'il puisse être cintré manuellement au montage sur son support, notamment sur le bord d'un pare-brise.

Le ou les bourrelet(s) 18 selon l'invention sont alors préférentiellement disposés dans la portion de la partie d'accrochage 2 opposée à celle renfermant l'insert plat 17.

Ils sont ainsi situés de préférence au niveau des parois latérales 4 et 5 de la partie d'accrochage 2 et plus préférentiellement encore à proximité ou au niveau de l'extrémité libre de ces parois latérales 4 et 5, près de l'ouverture de la rainure 6.

On peut néanmoins envisager d'appliquer l'invention à des profilés renfermant un insert différent, voire même à des profilés ne comportant aucun insert.

On peut ainsi par exemple, envisager d'extruder un bourrelet 18 selon l'invention en remplacement d'un tel insert métallique. Dans ce cas, le bourrelet 18 selon l'invention est de préférence disposé à la base de la partie d'accrochage 2. Ce bourrelet 18, situé au niveau de la paroi de base 3 de la partie d'accrochage 2, peut évidemment être complété par un ou plusieurs autre(s) bourrelet(s) 18 selon l'invention disposé(s) au niveau des parois latérales 4 et 5 de la partie d'accrochage 2.

Dans un mode de réalisation préféré, des bourrelets 18 sont présents de chaque côté de la fibre neutre du profilé 1 pour mieux stabiliser ce dernier. Il est cependant envisageable de n'avoir qu'un unique bourrelet 18 sur le profilé 1 ou plusieurs bourrelets 18 situés du même côté.

Une telle matière plastique chargée ne permet généralement pas d'obtenir la qualité de surface requise par les constructeurs automobiles. Les bourrelets 18 sont ainsi placés de préférence en partie non visible du profilé 1 une fois celui-ci monté sur son support.

Ainsi par exemple, le profilé de la figure 4 comporte deux bourrelets 18 selon l'invention, l'un 19 situé sur la paroi latérale supérieure 4 et l'autre 20 sur la paroi latérale inférieure 5. Le bourrelet 20 situé sur la paroi latérale inférieure 5, non visible, occupe toute l'extrémité libre de cette paroi, tandis que le bourrelet 19 se limite à la face intérieure non visible de la paroi latérale supérieure 4.

En outre, la paroi latérale supérieure 4 étant relativement peu épaisse, la présence d'un bourrelet 19 au dos de cette paroi pourrait faire apparaître des marques ou retassures sur la face extérieure visible de celle-ci.

Pour limiter ce phénomène, le bourrelet 19 situé au dos de cette paroi est préférentiellement d'épaisseur et/ou de taille réduites. Il est pour cette raison moins important que le bourrelet 20 situé de l'autre côté et peut même dans certains cas être supprimé.

Si la présence d'un ou de plusieurs bourrelet(s) d'un seul côté de la fibre neutre est suffisante, ce seront préférentiellement les bourrelets situés du côté de la paroi visible du profilé qui seront supprimés.

Sur la figure 5, on a représenté un autre modèle de profilé selon l'invention. Il s'agit ici d'un profilé extrudé 21 destiné à être monté sur un rebord de carrosserie de type enjoliveur latéral de pare-brise.

Comme le profilé 1 décrit précédemment, il comporte une partie d'accrochage 22 à section de forme générale en U comportant une paroi de base 23 et deux parois latérales 24 et 25, qui délimitent entre elles une rainure 26 de réception du rebord de carrosserie sur lequel le profilé 21 est monté.

Le profilé 21 comporte également une partie fonctionnelle 27, formée d'une couche de matière plastique plus souple que celle constituant la partie d'accrochage 22, qui recouvre la paroi de base 23 de la partie d'accrochage 22 et se prolonge des deux côtés par deux parois longitudinales de masquage 28 et 29.

Le profilé extrudé 21 est préférentiellement renforcé par un insert plat 17, de préférence en aluminium, disposé entre la paroi de base 23 et la partie fonctionnelle 27.

Le profilé 21 comporte deux bourrelets 18 en matière plastique à dilatation et retrait réduits conformément à l'invention. Ces bourrelets 18 sont avantageusement placés de part et d'autre de la fibre neutre, dans la portion de la partie d'accrochage 22 opposée à l'insert 17 et plus précisément au niveau de l'extrémité libre des parois latérales 24 et 25.

Les parois latérales 24 et 25 étant entièrement cachées à la vue par la partie fonctionnelle 27 et ses parois longitudinales de masquage 28 et 29, les bourrelets 18 peuvent être relativement importants et occuper entièrement l'extrémité des parois latérales 24 et 25.

En modulant leur composition, leur position et leur quantité, ces bourrelets 18 en matière plastique à dilatation et retrait réduits, permettent une correction du galbe, qui peut être ajusté pour obtenir selon les besoins un galbe nul ou le galbe souhaité, par exemple un galbe identique à celui du pare-brise et dans le sens du montage.

Dans son mode de réalisation préféré, les coûts d'outillage de l'invention sont extrêmement réduits car il n'y a besoin ni de formage de l'insert en aluminium, ni de cintrage du profilé.

Ainsi, la présence d'un ou de plusieurs bourrelet(s) selon l'invention permet avantageusement et sans surcoût important, d'orienter ou de corriger la déformation linéaire et/ou d'obtenir un galbe contrôlé dans une certaine direction.

De manière évidente, l'invention ne se limite pas aux modes de réalisation préférentiels décrits et représentés sur les figures, l'homme du métier pouvant y apporter de nombreuses modifications et imaginer d'autres variantes sans sortir de cette idée inventive.

## Revendications

1. Profilé extrudé (1, 21) comportant une partie fonctionnelle (7, 27) et une partie d'accrochage (2, 22) à section de forme générale en U, comprenant une paroi de base (3, 23) prolongée par deux parois latérales (4, 5, 24, 25) délimitant entre elles une rainure (6, 26) qui permet la mise en place du profilé (1, 21) sur un support, **caractérisé en ce que** la partie d'accrochage (2, 22) comporte au moins un bourrelet (18) coextrudé en matière plastique à dilatation et retrait réduits, s'étendant longitudinalement sur sensiblement toute la longueur du profilé, en vue d'orienter ou de corriger la déformation linéaire du profilé (1, 21).

2. Profilé extrudé selon la revendication précédente **caractérisé en ce que** sa partie d'accrochage (2, 22) comporte au moins deux bourrelets (18) en matière plastique à dilatation et retrait réduits, répartis de part et d'autre de la fibre neutre du profilé.

3. Profilé extrudé selon l'une quelconque des revendications précédentes **caractérisé en ce qu'**au moins un bourrelet (18) est situé dans une partie non visible du profilé (1, 21) lorsqu'il est monté sur son support.

4. Profilé extrudé selon l'une quelconque des revendications précédentes **caractérisé en ce qu'**au moins un bourrelet (18) est situé au niveau de l'une des parois latérales (4, 5, 24, 25) de la partie d'accrochage (2, 22).

5. Profilé extrudé selon la revendication précédente **caractérisé en ce qu'**au moins un bourrelet (18) est situé à proximité de l'extrémité libre de l'une des parois latérales (4, 5, 24, 25) de la partie d'accrochage (2, 22).

6. Profilé extrudé selon la revendication précédente **caractérisé en ce qu'**au moins un bourrelet (18) occupe entièrement l'extrémité libre de l'une des parois latérales (4, 5, 24, 25) de la partie d'accrochage (2, 22).

7. Profilé selon l'une quelconque des revendications précédentes **caractérisé en ce qu'**il comporte un bourrelet (18) situé au niveau de la paroi de base (3, 23) de la partie d'accrochage (2, 22).

8. Profilé selon l'une quelconque des revendications précédentes **caractérisé en ce qu'**au moins un bourrelet (18) est réalisé en matière plastique chargée.

9. Profilé selon la revendication précédente **caractérisé en ce qu'**au moins un bourrelet (18) est réalisé en polypropylène chargé.

10. Profilé selon la revendication 8 ou 9 **caractérisé en ce qu'**au moins un bourrelet (18) est réalisé en matière plastique renforcée par des fibres de verre.

11. Profilé selon la revendication 8 ou 9 **caractérisé en ce qu'**au moins un bourrelet (18) est réalisé en matière plastique renforcée par du talc.

12. Profilé selon la revendication 8 ou 9 **caractérisé en ce qu'**au moins un bourrelet (18) est réalisé en matière plastique renforcée par un mélange de fibres de verre et de talc.

13. Profilé selon l'une quelconque des revendications précédentes **caractérisé en ce que** sa partie d'accrochage (2, 22) est renforcée par un insert plat (17) disposé au niveau de sa paroi de base (3, 23).

14. Profilé selon la revendication précédente **caractérisé en ce que** l'insert plat (17) est en aluminium.

15. Profilé selon l'une quelconque des revendications précédentes **caractérisé en ce qu'**il s'agit d'un profilé enjoliveur de pare-brise.
